(19) **Europäisches Patentamt**
**European Patent Office**
**Office européen des brevets**

(11) **EP 2 314 553 A1**

(12) **DEMANDE DE BREVET EUROPEEN**

(43) Date de publication:
**27.04.2011 Bulletin 2011/17**

(51) Int Cl.:
***C03C 17/34*** *(2006.01)*

(21) Numéro de dépôt: **09173300.6**

(22) Date de dépôt: **16.10.2009**

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**
Etats d'extension désignés:
**AL BA RS**

(71) Demandeur: **AGC Glass Europe**
**1170 Bruxelles (Watermael-Boitsfort) (BE)**

(72) Inventeur: **La désignation de l'inventeur n'a pas encore été déposée**

(74) Mandataire: **Le Vaguerèse, Sylvain Jacques et al**
**AGC Glass Europe**
**Propriété Intellectuelle**
**Rue de l'Aurore 2**
**6040 Jumet (BE)**

(54) **Vitrage réflechissant émaille**

(57) L'invention concerne un vitrage comportant un système de couches déposées sous vide présentant des propriétés de filtre du rayonnement solaire, ce système étant revêtu au moins en partie par une couche d'émail.

EP 2 314 553 A1

**Description**

La présente invention concerne des vitrages comportant un système de couches déposées sous vide et une couche d'émail en contact au moins partiel avec ce système de couches.

La combinaison envisagée est typiquement de celles qui se trouvent sur certains vitrages utilisés par exemple dans le bâtiment pour constituer des allèges. Dans la suite de la description, parlant des produits visés par l'invention, il sera fait référence aux allèges étant entendu qu'il ne s'agit que d'une manière de simplification, l'invention couvrant l'ensemble des produits dans lesquels la combinaison d'un système de couches diélectriques est présent avec au moins un émail au contact de ce système et le recouvrant au moins en partie.

De manière plus précise une application importante des vitrages selon l'invention concerne les immeubles revêtus de verre. Pour ces bâtiments, compte tenu des surfaces concernées, les vitrages utilisés comportent normalement des systèmes de couches présentant des propriétés de contrôle de l'énergie rayonnée pour limiter la nécessité de climatisation (contrôle solaire) et réduction de l'énergie émise par le bâtiment (isolation). Les bâtiments sont fréquemment pratiquement entièrement revêtus. Aussi les vitrages couvrent à la fois les parties qui doivent offrir une transmission lumineuse significative, et celles dont la transmission est pratiquement nulle. Ces dernières correspondent notamment aux éléments de structure. A cet effet il est habituel d'utiliser des couches d'émail opaque pour masquer ces éléments.

Les vitrages utilisés vus de l'extérieur des bâtiments, offrent de préférence une esthétique améliorée. Pour cette raison il est traditionnel de conserver le système de couches même dans les parties revêtues d'émail, ce qui peut conduire à la superposition d'un système de couches et de l'émail.

Les revêtements antisolaires ou bas émissifs peuvent être appliqués de différentes façons selon la nature des couches. Pour les dépôts de type pyrolytique, les couches constituées sont en règle générale bien résistantes. Mais même sur ces couches l'application de la couche d'émail peut occasionner l'apparition de défauts. Les dépôts sous vide offrent une variété de propriétés qui ne peuvent pas toujours être obtenues avec les couches déposées par pyrolyse. Néanmoins les systèmes de couches formés par dépôt sous vide, du type pulvérisation cathodique, sont en règle générale beaucoup plus fragiles et engendre des défauts visibles après dépôt de l'émail.

Les émaux utilisés pour ces applications sont constitués typiquement d'une composition comprenant une fritte de verre destinée à former la matrice vitreuse, et de pigments colorants. La composition comprend encore un médium permettant l'application du mélange fritte/pigments, lequel assure une bonne suspension des particules solides et s'élimine au cours de la cuisson de l'émail. Ce médium comprend des solvants, huiles résines etc...

Dans la pratique, en particulier lors de la cuisson de l'émail, opération qui s'effectue à des températures de l'ordre de 550-700°C, des modifications peuvent intervenir dans les couches au contact de cet émail. Les réactions de nature indéfinie entraînent une altération de l'apparence du vitrage. Il se forme des tâches qui modifient leur aspect.

Les inventeurs ont recherché un moyen de prévenir l'apparition des défauts dans ce type de produits.

L'invention propose des vitrages comportant un système de couches diélectriques déposées sous vide, système présentant des propriétés de filtre du rayonnement solaire, le système de couches étant au moins en partie revêtu d'un émail. Les inventeurs ont établi qu'il était possible de choisir les composants du système de couches de telle sorte que celui-ci ne soit pas altéré par le contact avec la composition d'émail.

Les vitrages selon l'invention comprennent un système de couches déposé sous vide, présentant des propriétés de filtre du rayonnement solaire en l'absence du revêtement émaillé, le système de couches comprenant au moins une couche résistante superficielle, cette couche étant à base d'oxyde de titane, d'oxyde de niobium, d'oxyde de tantale, ou d'oxydes mixtes des précédents, ou avec d'autres oxydes métalliques.

Parmi les oxydes additionnels ceux des métaux du groupe comprenant Al, Zr, Hf, V, Mn, Fe, Co, Ni, Cu, Si, Cr, Ta et Nb sont avantageux.

La couche superficielle peut aussi renfermer en très faible proportion, en général moins de 8% en poids et le plus souvent moins de 5%, des éléments additionnels. Il s'agit notamment de dopants dont le rôle est principalement d'améliorer la fabrication et/ou la mise en oeuvre des cathodes dans la production des couches dans les techniques de dépôt sous vide. Ces éléments traditionnellement sont destinés notamment à améliorer la conductibilité des matériaux constituant des cathodes tels que : Ti, Al. Il peut aussi s'agir de composés stabilisant certains constituants tels que Ca, Mg, ou encore d'éléments qui apparaissent comme indissociables d'autres lors de la préparation. C'est le cas des lanthanides comme l'oxyde d'yttrium ou de celui de hafnium.

Lorsque l'oxyde de titane est choisi comme base de la couche résistante superficielle, il est nécessairement combiné à au moins un autre oxyde métallique qui renforce sa résistance. Il apparaît en effet que l'oxyde de titane qui offre de bonnes propriétés optiques, est insuffisamment résistant aux sollicitations mécaniques ou chimiques. A l'inverse les oxydes de tantale ou niobium peuvent être utilisés seuls (en dehors des possible éléments dopants présents).

Lorsqu'une couche à base d'oxyde de titane est choisie, elle renferme au moins 40% et au plus 95% en poids d'oxyde de titane.

Il va de soi que le vitrage comportant le système de couches lorsqu'il est revêtu d'émail est pratiquement opaque. La transmission lumineuse du vitrage émaillé est dans tous les cas inférieure à 5%, et le plus souvent inférieure à 2%. La présence du système de couches sous l'émail à pour but de maintenir les propriétés, et surtout les propriétés de réflexion qui sont celles du vitrage ne comprenant pas de revêtement émaillé. L'important est en effet de maintenir une apparence externe similaire pour les parties transparentes des vitrages et celles qui ne le sont pas. Cette nécessité est d'autant plus importante que la réflexion est elle-même plus élevée. Avantageusement les vitrages selon l'invention comportent un système de couches tel qu'appliqué sur un verre float clair de 4mm d'épaisseur, la réflexion du côté de la feuille de verre opposé au système de couches serait d'au moins 15% de la lumière solaire incidente, et la transmission d'au moins 60%.

De préférence les vitrages selon l'invention comportent un système de couches réfléchissant qui appliqués sur une feuille de verre float clair de 4mm conduirait à une réflexion comprise entre 20 et 40% de la lumière solaire incidente.

En dehors de la couche réfléchissante superficielle très résistante constituée comme indiqué ci-dessus, le système peut comprendre d'autres couches entre cette couche réfléchissante et la feuille de verre.

Des couches additionnelles sont utilisées notamment pour éviter la diffusion d'ions alcalins à partir du substrat verrier. Ces couches additionnelles peuvent aussi améliorer la résistance mécanique ou les propriétés optiques du système de couches et notamment le caractère réfléchissant.

Des sous-couches "barrière" préférées utilisées pour améliorer la protection contre la diffusion d'ions alcalins depuis la feuille de verre sont par exemple constituées d'au moins un des composés du silicium : oxyde ($SiO_2$), nitrure ($Si_3N_4$), oxynitrure (SiON); ou des oxydes de $SnO_2$ et oxydes composés d'étain et de zinc (jusqu'à 50% en poids d'oxyde de zinc), ou encore le $TiO_2$ éventuellement sous-stoechiométrique ou éventuellement sous forme d'oxynitrure contenant une faible teneur en azote (N/O inférieur à 10%).

A titre indicatif les sous-couches barrières constituées à base de $SiO_2$ ont un indice de l'ordre de 1,5 quand celui du $TiO_2$ est de l'ordre 2,5.

Lorsque les couches additionnelles présentent un indice de réfraction peu élevé leur épaisseur est choisie de préférence relativement plus faible que celle de la ou des couches réfléchissantes pour ne pas altérer les propriétés en question. Le chemin optique correspondant à cette couche barrière de faible indice avantageusement ne représente pas plus du quart du chemin optique de l'ensemble des couches du système.

Avantageusement lorsqu'une ou plusieurs sous-couches sont utilisées pour contribuer aux propriétés réfléchissantes du système, elles sont choisies avec un indice de réfraction aussi élevé que possible et de préférence supérieur à 2,2. Différentes couches réfléchissantes sont utilisables notamment les couches d'oxyde de titane, d'oxyde de niobium, oxyde de tantale, oxyde de zirconium éventuellement sous forme sous oxydée ou sous forme d'oxynitrures.

Contrairement à la couche superficielle, lorsqu'une sous-couche améliorant la réflexion est à base d'oxyde de titane, il n'est pas nécessaire de combiner cet oxyde avec des éléments qui en améliorent la résistance. Etant sous la couche réfléchissante par principe résistante, cette sous-couche, en elle même peut ne pas offrir les mêmes qualités. L'utilité d'une telle couche $TiO_2$ sans addition d'un autre oxyde réside dans l'indice élevé qu'il présente comparé à celui des oxydes mixtes de titane et d'au moins un autre métal. Ces oxydes mixtes, bien que formant une couche de réflexion significative, à épaisseur égale, réfléchissent moins que l'oxyde de titane seul. La combinaison d'une couche primaire d'oxyde de titane au contact du verre et d'une couche d'oxyde mixte de titane et d'un autre métal combine à la fois l'avantage globalement d'un indice de réfraction élevé et d'une bonne résistance superficielle.

L'utilisation d'une couche d'oxyde de titane d'indice élevé peut ne pas présenter cependant le meilleur ensemble de propriétés, en particulier de propriétés mécaniques. Les couches relativement épaisses de $TiO_2$ ne sont pas nécessairement les plus appropriées. Ceci peut encore conduire à limiter l'épaisseur de la couche sous-jacente de $TiO_2$ (ou TiOx, ou TiOxNy), d'autres couches à relativement fort indice complétant le système, y compris notamment une autre couche d'oxyde de titane mixte dont l'autre métal est de même nature ou différente de celle du métal de la couche superficielle.

Un ensemble typique comprend par exemple en plus de la couche superficielle très résistante, une ou plusieurs couches à fort indice de réfraction, et une couche barrière. Un ensemble de couches réfléchissantes de ce type est par exemple une succession de couches comprenant une couche superficielle à base d'une composition d'oxyde mixte de titane et de zirconium, au contact de celle-ci une couche d'oxyde de titane avantageusement déposée à partir d'un cathode céramique d'oxyde de titane éventuellement dopé, et conduisant à une couche d'oxyde légèrement sous-stoechiométrique, sous cette couche une autre couche d'oxyde mixte de titane et d'un autre oxyde du type de ceux pouvant intervenir dans la couche superficielle.

Les couches réfléchissantes déposées sous vide dans de bonnes conditions ne donnent pas naissance normalement à des phénomènes de diffusion de la lumière. A l'inverse en l'absence d'une couche protectrice superficielle selon l'invention, l'application d'une couche d'émail, et la cuisson de celle-ci comme indiqué précédemment altèrent les propriétés optiques par formation de taches ou au moins l'apparition de voiles ("haze") qui altèrent l'aspect de ces vitrages. Un voile important donne l'apparence d'un halo blanc. De plus la présence d'un voile dans ces vitrages n'est pas homogène ce qui ajoute au défaut d'aspect.

Le voile est défini par l'expression :

$$H = R_d/R_l \times 100$$

dans laquelle $R_d$ est la réflexion dispersée sous grand angle (lumière diffusée), et $R_l$ la réflexion totale.

Les vitrages selon l'invention dont les couches réfléchissantes sont résistantes ne développent pratiquement pas ce type de défaut. L'application et la cuisson de l'émail qui recouvre les couches réfléchissantes ne conduit pas à la formation d'un voile notable. De préférence les vitrages selon l'invention ne présentent pas de voile supérieur à 3,5%, et de préférence pas supérieur à 2,5%. Dans les meilleures conditions le voile est avantageusement maintenu en dessous de 2%.

Si le vitrage revêtu d'émail ne présente ni tache, ni voile notable, certaines qualités optiques sont néanmoins modifiées par la présence de l'émail. En particulier la réflexion de l'ensemble peut différer des celle du vitrage qui ne comporte que le système de couches réfléchissant. Cette variation est cependant acceptable pour autant que la variation de couleur en réflexion reste limitée.

Pour les vitrages selon l'invention, les couches du système réfléchissant, mais aussi la couleur de l'émail utilisé, sont tels que la variation de couleur en réflexion ∆E, du vitrage revêtu d'émail par rapport à celui qui ne comporte pas d'émail, demeure inférieur à 3 et de préférence inférieur à 2. E correspond à l'expression :

$$E = (a^{*2} + b^{*2})^{\frac{1}{2}}$$

dans laquelle a* et b* sont les coordonnées colorimétriques dans le système Hunter LAB.

La condition indiquée précédemment sur la variation ∆E est d'autant mieux satisfaite que l'émail utilisé est plus sombre.

Lorsque la condition précédente est remplie, les variations de la réflexion peuvent être relativement importantes sans pour autant conduire à une différence d'aspect préjudiciable. A titre indicatif cette différence de réflexion avec et sans la couche d'émail peut atteindre 25% de la valeur en l'absence d'émail, mais est de préférence inférieure à 20%.

Les vitrages selon l'invention sont réalisés avec des feuilles de verre clair mais aussi et de préférence avec des feuilles de verre colorés. Dans les applications au verre de bâtiment les couleurs les plus usuelles sont le gris, le bleu et le vert. Les couleurs de l'émail sont généralement aussi neutres que possible. Les émaux sont essentiellement noirs mais peuvent présenter des nuances.

Dans la suite de la description sont reportés des exemples de systèmes de couches réfléchissants et leurs propriétés lorsque ces systèmes sont revêtus d'une couche d'émail.

Des systèmes de couches sont notamment constitués de la façon suivante en partant du verre, les épaisseurs données entre parenthèses sont exprimées en nanomètres :

1. G/ $SnO_2$ (15)/TZO (50)
2. G/$Si_3N_4$ (17)/TZO (38)
3. G/$SiO_2$ (10)/TZO (50)
4. G/$SnO_2$ (10)/TaO (20)
5. G/$SnO_2$ (10)/TaNbO (20)
6. G/$SnO_2$ (10)/TiOx (10)/TZO (30)
7. G/$SiO_2$ (40)/TiOx (10)/TZO (30)

Dans ces systèmes TZO est une couche constituée d'un oxyde mixte de titane et de zirconium à 45% en poids de zirconium. Elle comprend en outre de l'oxyde d'yttrium (environ 6%) qui stabilise le zirconium. Eventuellement la couche comprend aussi des oxydes d'aluminium, de titane ou d'autres éléments qui incorporés aux cathodes améliorent leur conductibilité et par là, la stabilité de l'opération de dépôt. TiOx désigne l'oxyde de titane déposé à partir d'une cathode céramique, et présentant éventuellement une légère sous-stoechiométrie. TaNbO est oxyde mixte de tantale et de niobium.

Dans ce qui précède, il est question du revêtement du système de couches par une composition d'émail. Ce revêtement peut être uniforme sur l'ensemble de la feuille de verre, il peut aussi ne viser qu'une partie de celle-ci. De la même façon l'application de l'émail peut correspondre à un motif déterminé appliqué sur la feuille notamment à des fins décoratives.

Des systèmes de couches du type 6 indiqué ci-dessus sont appliqués par dépôt magnétron sur des échantillons de verre clair, gris, bleu et vert. Les feuilles de verre des échantillons ont une épaisseur de 6 mm.

Sur le système en question on dépose une couche de composition d'émail noir comprenant 15% en poids de pigments (oxydes de fer, de chrome et cobalt), et 60% de fritte à base de borosilicates, le reste étant constitué du médium d'application. L'émail est appliqué par sérigraphie sur la totalité de la surface de l'échantillon revêtu préalablement du système de couches. L'émail est cuit à 670 °C durant 45 seconde par millimètre d'épaisseur de verre.

Le tableau suivant donne en coordonnées Hunter (illuminant D65, 10°) les qualités colorimétriques en réflexion des différents échantillons. Aucun de ces échantillons ne montre de voile significatif (reste inférieur à 1%). Le premier échantillon n'est pas revêtu d'émail pour établir une comparaison avec les autres échantillons.

| n°, émail | verre | L* | a* | b* |
|---|---|---|---|---|
| I, non | clair | 63,1 | - 2,2 | - 3,8 |
| II, oui | clair | 44,6 | - 2,2 | - 2,3 |
| III, oui | vert | 39,2 | - 6,0 | - 0,8 |
| IV, oui | bleu | 35,2 | - 3,6 | - 8,1 |
| V, oui | gris | 31,5 | - 0,3 | - 2,4 |

Les exemples I et II montrent que l'application de l'émail sur les couches réfléchissantes ne modifie pas sensiblement la couleur en réflexion. Les valeurs a* et b* sont pratiquement identiques. La présence de l'émail fait varier la luminance, autrement dit, l'intensité de la lumière réfléchie.

Cette constatation est mise à profit dans l'utilisation de vitrages dont la coloration est assurée par celle de la feuille de verre. Les exemples III et IV, montrent des nuances types obtenues avec des verres offrant simultanément une réflexion significative et une coloration bien marquée. L'application sur verre gris de l'exemple V, illustre ce qui peut être obtenu avec un verre de coloration plus «neutre».

D'autres essais sont réalisés avec des systèmes de couches variées toutes déposées sur verre clair de 6 d'épaisseur. Le tableau suivant indique la nature et l'épaisseur des couches de ces systèmes et les caractéristiques colorimétriques avant et après application de l'émail (comme aux exemples précédents) ainsi que la mesure du voile après cuisson de l'émail.

A titre comparatif un échantillon (C) est préparé qui comporte une couche d'oxyde de titane obtenue par pyrolyse gazeuse (CVD) en principe plus résistante.

Les épaisseurs reportées sont en nanomètres. Les valeurs correspondent d'abord à celles de l'échantillon avec les couches, les dernières valeurs sont celles du même échantillon revêtu d'émail après cuisson. La première couche est déposée sur le verre. La couche superficielle est la seconde couche pour les exemples 1 à 16. Pour les exemples 17 à 23 la couche superficielle est la troisième couche.

| | 1ère couche | 2ème couche et 3ème couche | L* | a* | b* | L* | a* | b* | voile |
|---|---|---|---|---|---|---|---|---|---|
| | | | sans émail | | | avec émail | | | |
| C. | TiO₂ (45) | | 60 | - 3,2 | -6,0 | 52,2 | -2,8 | -5,4 | 9,8 |
| 1 | TZO (30) | | 53,4 | -1,5 | -9,4 | 40,4 | -2,1 | -6,6 | 3,1 |
| 2 | ZSO50 (30) | TZO (30) | 58,0 | -1,9 | -0,4 | 41,6 | -2,3 | 2,1 | 1,2 |
| 3 | SnO₂ (10) | TaO (50) | 57,9 | -2,1 | -0,2 | 40,5 | -1,6 | 4,0 | 2,7 |
| 4 | SnO₂ (25) | TaO (25) | 55,8 | -2,2 | -4,8 | 46,9 | -2,2 | 0,7 | 2,2 |
| 5 | SnO₂ (25) | TaNbO(25) | 57,6 | -2,3 | -5,1 | 45,2 | -2,2 | -1,8 | 1,8 |
| 6 | SnO₂ (30) | TaNb0(20) | 56,8 | -2,2 | -5,1 | 44,2 | -2,1 | -1,6 | 1,6 |
| 7 | SnO₂ (25) | NbO (25) | 58,2 | -2,2 | -6,2 | 45,7 | -2,3 | -2,9 | 1,9 |
| 8 | Si₃N₄ (10) | TZO (50) | 61,7 | -2,1 | -1,7 | 47,4 | -2,4 | 0,2 | 3,2 |
| 9 | Si₃N₄ (17) | TZO (38) | 60,0 | -1,9 | -4,7 | 46,1 | -2,2 | -2,0 | 2,2 |
| 10 | SiO₂ (10) | TZO (50) | 61,4 | -2,1 | -5,4 | 46,7 | -2,6 | -2,5 | 1,8 |
| 11 | SiO₂ (30) | TZO (50) | 61,3 | -2,1 | -5,8 | 46,5 | -2,6 | -3,0 | 1,5 |
| 12 | TiOx (20) | TZO (20) | 61,7 | -1,9 | -8,2 | 45,1 | -2,1 | -5,8 | 2,2 |

(suite)

| | 1ère couche | 2ème couche et 3ème couche | L* | a* | b* | L* | a* | b* | voile |
|---|---|---|---|---|---|---|---|---|---|
| | | | sans émail | | | avec émail | | | |
| 13 | TiOx (30) | TZO (20) | 64,6 | -2,5 | 2,5 | 46,6 | -2,4 | 2,4 | 2,2 |
| 14 | SnO$_2$ (30) | TNO (30) | 61,8 | -2,4 | -2,4 | 49,1 | -2,4 | -0,8 | 1,3 |
| 15 | TiOx (30) | TNO (25) | 65,3 | -2,3 | -2,9 | 52,3 | -3,1 | 1,8 | 2,1 |
| 16 | TiOx (20) | TNO (30) | 65,1 | -2,2 | -6,0 | 51,8 | -3,1 | -0,8 | 2,4 |
| 17 | SiO$_2$ (40) | TiOx (10)/ TZO (30) | 59,59 | -1,98 | -9,09 | 46,3 | -2,2 | -6,4 | 1,49 |
| 18 | TZO (10) | TiOx (20)/ TZO (40) | 62,24 | -2,33 | 11,74 | 46 | -0,6 | 11,5 | 1,17 |
| 19 | TZO (5) | TiOx (10)/ TZO (20) | 58,81 | -1,99 | -8,48 | 44,7 | -2 | -5,9 | 1,66 |
| 20 | TZO (20) | TiOx (5)/ TZO (40) | 63,36 | -2,26 | 3,3 | 46,2 | -1,3 | 9,44 | 1,33 |
| 21 | SnO$_2$ (40) | TiOx (10 )/ TZO (30 ) | 59,5 | -1,25 | 7,05 | 42,4 | -0,2 | 9,71 | 1,64 |
| 22 | SnO$_2$ (10) | TiOx (30)/ TZO (30) | 64,11 | -2,52 | 9,03 | 46,9 | -1,1 | 7,8 | 1,66 |
| 23 | SnO$_2$ (5) | TiOx (10)/ TZO (30) | 61,55 | -2,14 | -6,47 | 46,8 | -2,4 | -2,4 | 1,88 |

TZO est la couche d'oxyde mixte de titane et de zirconium décrite précédemment constituée d'un oxyde mixte de 50% en poids de TiO$_2$, 46% de ZrO$_2$, le reste venant d'éléments accompagnant habituellement le zirconium, notamment d'oxyde d'yttrium.

ZSO50 est une couche d'oxyde mixte d'étain et de zinc en proportion en poids 50/50.

TaO désigne l'oxyde de tantale (il ne s'agit pas de la formule chimique mais d'une désignation générique, idem pour NbO et TaNbO en ce qui concerne respectivement l'oxyde de niobium ou l'oxyde mixte de niobium et de tantale (proportion atomique 50/50).

On utilise de cibles métallique de Ta, Nb et Ta-Nb et on dépose dans l'O2 afin d'obtenir Tao, NbO et TaNbO.

TxO est l'oxyde de titane déposé à partir des cathodes céramiques.

TNO est l'oxyde mixte de titane et de niobium en proportion massique 50/50.

Dans les exemples on remarque que la couche d'oxyde de titane seul, même obtenue par pyrolyse présente un voile conséquent après application de la couche d'émail. Les couches déposées dans les conditions de l'invention sont sensiblement moins affectées.

Toujours dans les exemples selon l'invention les couleurs sont un peu modifiées mais la teinte générale est peu affectée. La luminosité change un peu ce qui n'est pas préjudiciable pour des allèges.

Les figures annexées présentent les avantages liés à l'utilisation des vitrages selon l'invention comme allèges. Dans ces figures :

- la figure 1 représente la disposition de vitrage en façade d'un bâtiment ;
- la figure 2, représente un vitrage analogue à celui de la figure 1 comprenant une partie émaillée ;
- la figure 3 illustre une manière d'utilisation d'un vitrage selon l'invention
- la figure 4 représente de façon schématique un vitrage comportant un système de couche selon l'invention avec plusieurs couches réfléchissantes.

La façade d'un bâtiment revêtue de verre comporte de parties de "vision" permettant une transmission significative de la lumière extérieure. Cette partie de vision est représentée par un vitrage double (1,2). S'agissant de vitrage isolant les deux feuilles de verre délimitent un espace clos avec les joints intercalaires non représentés. La feuille 1 est revêtue par un système de couches (3) filtrant les rayonnements. Il s'agit par exemple d'un système réfléchissant une part significative du rayonnement solaire.

La position du système de couches (3) dans l'espace du vitrage isolant, le protège des altérations possibles soit mécaniques soit au contact de l'atmosphère. Cette disposition est particulièrement souhaitable pour les couches déposées sous vide par pulvérisation cathodique qui sont connues pour être relativement fragiles par comparaison aux couches "dures" formées par pyrolyse.

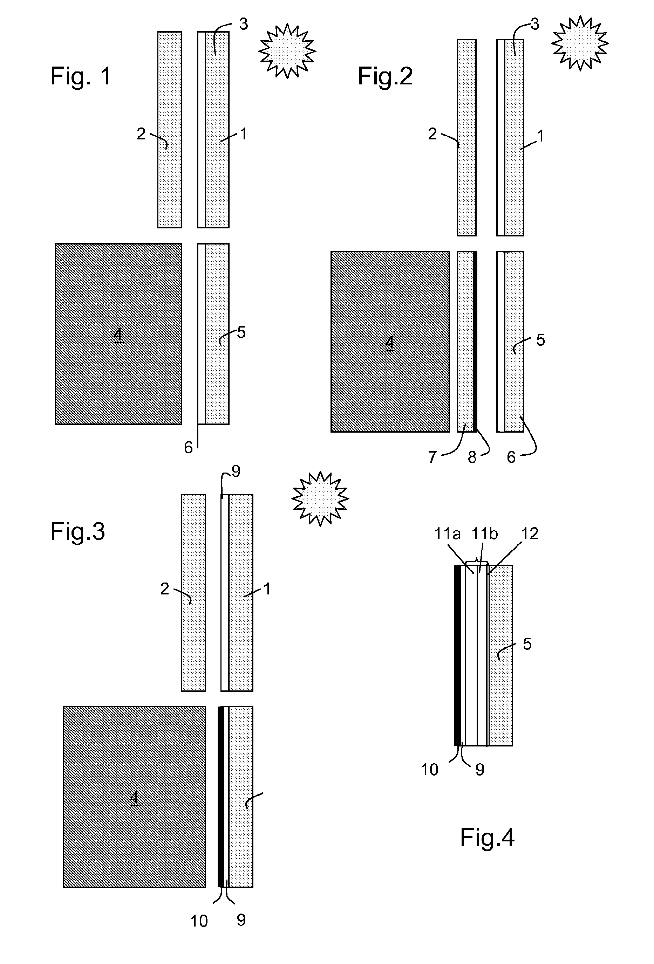

La figure 1 présente aussi une partie de la structure du bâtiment (4). Pour conserver de l'extérieur une apparence uniforme il est usuel de disposer également un vitrage (5) présentant les mêmes propriétés que celles de la partie de vision. En particulier pour maintenir une réflexion analogue, cette partie est également couverte d'une couche réfléchissante (6).

Dans la configuration de la figure 1 la structure du bâtiment (4) n'est pas dissimulée. La feuille 5 présente la même transmission lumineuse que la feuille (3). L'utilisation d'un émail de masquage est donc souhaitée. Néanmoins cet émail ne peut être disposé sur la face externe de la feuille 5, l'apparence en termes de couleur ou de réflexion ne pourrait être maintenue analogue à celle de la feuille de vision. Le recouvrement du système de couches (6) déposé sous vide par un émail était antérieurement inapplicable en raison des défauts et des changements de teintes résultant de l'interaction de l'émail avec le système de couches du fait de la fragilité de ce dernier.

La figure 2 présente une solution antérieure destinée à répondre à la nécessité de combiner la dissimulation de la structure (4) et le maintien de l'apparence externe. Pour parvenir à ce résultat l'émail (8) est appliqué sur une feuille 7 distincte de celle (5) portant la couche réfléchissante (6). Dans cette configuration l'ensemble des feuilles (5) et (7) ne forme pas à proprement parler un vitrage "isolant" dans la mesure où il n'est pas nécessaire que l'espace entre ces deux feuilles soit clos, et la seule fonction de la feuille (7) est d'abord de support de la couche émaillée.

La figure 3 illustre une utilisation des vitrages selon l'invention. Cette fois en raison du comportement amélioré du système de couches réfléchissant (9), il est possible de le revêtir de l'émail (10). De ce fait une feuille unique est susceptible de dissimuler la structure du bâtiment et de conserver l'apparence externe. Une simplification importante est donc rendue possible.

La figure 4 illustre schématiquement un revêtement selon l'invention comprenant un système à couches multiples. Dans cette représentation, comme précédemment la couche d'émail (10) recouvre la couche résistante (9). Sous cette dernière sont disposées d'autres couches réfléchissantes à fort indice de réfraction (11a et 11b). Ces couches complètent l'effet de la couche superficielle (9) et en améliorent les performances. Le cas échéant une couche barrière (12) est aussi appliquée pour prévenir la migration des ions alcalins depuis la feuille de verre (5).

## Revendications

1. Vitrage comportant un système de couches déposées sous vide présentant des propriétés de filtre du rayonnement solaire, ce système étant revêtu au moins en partie par une couche d'émail.

2. Vitrage selon la revendication 1 dans lequel le système de couches comporte en contact avec la couche d'émail une couche superficielle à base d'oxyde de titane, d'oxyde de niobium, d'oxyde de tantale ou d'oxydes mixtes des précédents, l'oxyde de titane étant nécessairement combiné à au moins un oxyde métallique du groupe comprenant Ta, Nb, Al, Zr, Hf, V, Mn, Fe, Co, Ni, Cu, Si, Cr.

3. Vitrage selon la revendication 2 dans laquelle la couche en contact avec l'émail est à base d'oxyde de titane lequel représente au moins 40% en poids de cette couche et au plus 95%.

4. Vitrage selon l'une des revendications précédentes dans lequel le système de couches est tel qu'appliqué sur une feuille de verre clair de 4mm d'épaisseur, il conduirait à une réflexion du coté de la feuille ne comportant pas le système, d'au moins 15% et une transmission d'au moins 60%.

5. Vitrage selon la revendication 4 dans lequel le système de couches est tel qu'appliqué sur une feuille de verre clair de 4mm d'épaisseur il conduirait à une réflexion du coté de la feuille ne comportant pas le système, compris entre 20% et 40%.

6. Vitrage selon l'une des revendications précédentes dans lequel le système de couches comporte au contact du verre au moins une couche protégeant contre la diffusion des alcalins constituée d'au moins un des composés suivants : oxyde de silicium ($SiO_2$), oxynitrure de silicium (SiON), nitrure de silicium, ($Si_3N_4$), oxyde d'étain éventuellement en combinaison avec de l'oxyde de zinc (jusqu'à 50% en poids de zinc), l'oxyde de titane $TiO_2$ éventuellement sous-stoechiométrique, les oxynitrures de titane.

7. Vitrage selon la revendication 6 dans lequel la couche barrière présente un chemin optique qui n'est pas supérieur au quart de celui de l'ensemble du système.

8. Vitrage selon l'une des revendications précédentes comprenant une ou plusieurs couches d'indice de réfraction supérieur à 2,2 sous la couche superficielle au contact de l'émail.

9. Vitrage selon l'une des revendications précédentes ne présentant pas un voile supérieur à 3,5 %, et de préférence pas supérieur à 2,5 %.

**10.** Vitrage selon l'une des revendications précédentes tel que la réflexion du côté de la feuille non revêtu, conduise à une différence de coloration avant et après application de la couche d'émail ΔE qui est inférieure à 3 et de préférence à 2, E étant défini par l'expression $E = (a*^2 + b*^2)^{1/2}$ dans le système colorimétrique Hunter.

**11.** Vitrage selon l'une des revendications précédentes comportant un des systèmes de couches :

G/ $SnO_2$ /TZO;
G/$Si_3N_4$ /TZO;
G/$SiO_2$ /TZO;
G/$SnO_2$ /TaO;
G/$SnO_2$/TaNbO;
G/SnO2/TiOx/TZO;
G/$SiO_2$/TiOx/TZO

dans lesquelles G désigne le verre, TZO est un oxyde mixte de titane et de zirconium à 45% en poids de zirconium comprenant 6% d'yttrium, TaO est l'oxyde de tantale désigné de façon générique de même que TaNbO est un oxyde mixte de tantale et de niobium (pourcentage 50/50 en poids), TiOx est l'oxyde de titane déposé à partir de cathodes céramiques

**12.** Utilisation d'un vitrage selon l'une des revendications précédentes comme allège.

**13.** Utilisation d'un vitrage selon l'une des revendications 1 à 11 pour constituer une feuille revêtue de motifs décoratifs émaillés.

Fig. 1

Fig.2

Fig.3

Fig.4

Europäisches
Patentamt

European
Patent Office

Office européen
des brevets

**RAPPORT DE RECHERCHE EUROPEENNE**

Numéro de la demande

EP 09 17 3300

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2007/028913 A1 (SAINT GOBAIN [FR]; BELLIOT SYLVAIN [FR]) 15 mars 2007 (2007-03-15) | 1,4-10, 12-13 | INV. C03C17/34 |
| Y | * page 1, ligne 6-30 * * page 4, ligne 5 - page 10, ligne 16 * * revendications 1-15; exemples 1,2; tableau 1 * ----- | 2-3,11 | |
| Y | WO 2009/115596 A1 (AGC FLAT GLASS EUROPE SA [BE]; DI STEFANO GAETAN [BE]) 24 septembre 2009 (2009-09-24) * page 1, ligne 1 - page 5, ligne 15; revendications 1-19; figures 1,2; exemples 1-10 * ----- | 2-3,11 | |
| Y | DE 10 2006 027029 A1 (HERAEUS GMBH W C [DE]) 13 décembre 2007 (2007-12-13) * alinéas [0002], [0011] - [0014]; figure 1; exemples 1-3 * ----- | 2-3 | |
| Y | US 4 995 895 A (GROTH ROLF [DE] ET AL) 26 février 1991 (1991-02-26) * colonne 1, ligne 11-20 * * colonne 2, ligne 55 - colonne 4, ligne 6 * * colonne 4, ligne 48-64 * * colonne 5, ligne 62-69 * * revendications 1-17; figures 1-3; exemples * ----- | 2-3 | DOMAINES TECHNIQUES RECHERCHES (IPC) C03C |
| Y | US 2006/134436 A1 (MASCHWITZ PETER A [US]) 22 juin 2006 (2006-06-22) * alinéas [0002], [0003], [0015] - [0017], [0023] - [0027]; revendications 1-27 * ----- | 2 | |

Le présent rapport a été établi pour toutes les revendications

| Lieu de la recherche | Date d'achèvement de la recherche | Examinateur |
|---|---|---|
| Munich | 15 mars 2010 | Wrba, Jürgen |

CATEGORIE DES DOCUMENTS CITES

X : particulièrement pertinent à lui seul
Y : particulièrement pertinent en combinaison avec un
  autre document de la même catégorie
A : arrière-plan technologique
O : divulgation non-écrite
P : document intercalaire

T : théorie ou principe à la base de l'invention
E : document de brevet antérieur, mais publié à la
  date de dépôt ou après cette date
D : cité dans la demande
L : cité pour d'autres raisons

.........................................................................................................

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 09 17 3300

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

15-03-2010

| Document brevet cité au rapport de recherche | Date de publication | Membre(s) de la famille de brevet(s) | Date de publication |
|---|---|---|---|
| WO 2007028913 A1 | 15-03-2007 | CN 101272992 A<br>EP 1919838 A1<br>FR 2889182 A1<br>JP 2009502566 T<br>KR 20080027894 A<br>US 2008226882 A1 | 24-09-2008<br>14-05-2008<br>02-02-2007<br>29-01-2009<br>28-03-2008<br>18-09-2008 |
| WO 2009115596 A1 | 24-09-2009 | AUCUN | |
| DE 102006027029 A1 | 13-12-2007 | CN 101460652 A<br>EP 2027302 A1<br>WO 2007141003 A1<br>JP 2009540112 T<br>US 2009183987 A1 | 17-06-2009<br>25-02-2009<br>13-12-2007<br>19-11-2009<br>23-07-2009 |
| US 4995895 A | 26-02-1991 | AU 597800 B2<br>AU 1268388 A<br>BR 8801107 A<br>DE 3716860 A1<br>EP 0281894 A2<br>FI 881139 A<br>JP 2775629 B2<br>JP 63248741 A<br>MX 167612 B | 07-06-1990<br>15-09-1988<br>18-10-1988<br>22-09-1988<br>14-09-1988<br>14-09-1988<br>16-07-1998<br>17-10-1988<br>30-03-1993 |
| US 2006134436 A1 | 22-06-2006 | AUCUN | |

EPO FORM P0460

Pour tout renseignement concernant cette annexe : voir Journal Officiel de l'Office européen des brevets, No.12/82